# DEMANDE DE BREVET EUROPEEN

(11) **EP 4 328 196 A1**
(43) Date de publication de la demande: **28.02.2024**
(21) Numéro de dépôt: 23189929.5
(22) Date de dépôt: 07.08.2023
(51) Int. Cl.: C02F 3/32, C02F 101/38, C02F 103/32

(54) **PROCÉDÉ ET DISPOSITIF POUR LE TRAITEMENT D' EFFLUENTS ORGANIQUES AVEC CULTURE HYDROPONIQUE**

(30) Priorité: 23.08.2022 FR 2208449
(71) Demandeur: Azuvia, 84310 Avignon (FR)
(72) Inventeur: SORET, Remi, 84810 Aubignan (FR); FONTAINE, Paul-Etienne, 84000 Avignon (FR); LOUP, Jean-Rémi, 84000 AVIGNON (FR); LUCAS, Olivier, 84000 AVIGNON (FR); BAUDUIN, Tristan, 84450 AVIGNON (FR)
(74) Mandataire: Barbot, Willy

(57) **Abrégé**

La présente invention concerne un procédé de traitement d'effluents organiques utilisant un dispositif qui comprend au moins une entrée pour les effluents organiques qui débouche sur au moins une cuve tampon, au moins une sortie pour les effluents traités, au moins une pompe permettant le transfert des effluents organique de la cuve tampon vers au moins un système de filtration des effluents organiques qui ; prend la forme d'au moins deux étages superposés comprenant chacun au moins une ligne de culture hydroponique comprenant des agrégats non solubles aptes à permettre la pousse des plantes et à capter les particules en suspension dans les effluents organiques, présentant une longueur comprise entre 1,5 et 2,5 mètres et une inclinaison de sorte à permettre un écoulement gravitaire des effluents organiques en son sein, et dans lequel les effluents organiques arrivent depuis la cuve tampon, par l'action de la pompe, dans la au moins une ligne de culture hydroponique de l'étage le plus haut du système de filtration, la traverse par écoulement gravitaire jusqu'à la au moins une ligne de culture hydroponique de l'étage inférieur, qu'elle traverse également par action gravitaire avant de retourner à la cuve tampon.

## Description

La présente demande de brevet revendique la priorité de la demande de brevet Français FR2208449 déposée en date du 23 août 2022.

### Domaine de l'invention :

L'invention concerne le traitement d'effluents organiques, qu'ils soient d'origine industrielle ou agricole.

### Art antérieur :

Les effluents organiques d'origine agricole ou industriels ne peuvent, selon les normes en vigueur, être rejetés dans le milieu naturel sans traitement préalable visant à dégrader la matière organique, à éliminer l'excès de matière minérale et notamment l'azote, le phosphore, le potassium et certains métaux lourds et hydrocarbures. En particulier, la réglementation en France exige, en zone normale, l'abattement des matières en suspension et des matières oxydables, et la suppression des rejets des boues de station d'épuration dans les eaux de surface. Les solutions d'assainissement utilisées à ce jour sont essentiellement les procédés de dépollution par épuration biologique en stations d'épuration pour les eaux usées et l'épandage sur sols cultivés pour les effluents agricoles.

Ces procédés bien que satisfaisant aux obligations énoncées ci-dessus, présentent cependant divers inconvénients. En particulier, en ce qui concerne le traitement des effluents d'origine agricole ou industriels, la construction et la maintenance des stations d'épuration engendrent des coûts élevés, limitant leur intérêt pour des besoins ponctuels (effluents agricoles). D'autre part, les capacités de traitement de l'azote et du phosphore sont en général limitées dans ces installations.

Certains procédés alternatifs ont été proposés pour tenter de remédier aux inconvénients énoncés ci-dessus. On citera en particulier le lagunage et la filtration sur lit de sable. Ces techniques reposent sur l'utilisation de sols suffisamment sableux pour permettre à la fois une bonne percolation et une bonne filtration des eaux à traiter dans un milieu toujours aéré. Maintenant, ces techniques nécessitent beaucoup d'espace, un terrassement obligatoire, un entretien régulier et s'avèrent peu adaptées aux effluents chargés issus de l'agroalimentaire sans dispositif d'aération complémentaire.

### Sommaire de l'invention

La présente invention a pour but de proposer une solution pour le traitement des effluents organiques par bio-assainissement, à un coût d'installation et de fonctionnement réduit, qui permette un abattement significatif de l'azote ou de la demande chimique en oxygène (DCO), et qui s'adapte à un fonctionnement discontinu, avec des périodes de forte activité et des périodes de dormance, tout en présentant un risque de contamination des surfaces voisines quasi-nulles.

En particulier, l'invention porte sur un dispositif pour le traitement d'effluents organiques qui comprend :
- au moins une entrée pour les effluents organiques ;
- au moins une cuve tampon, dans laquelle débouche ladite entrée ;
- au moins un système de filtration des effluents organiques ;
- au moins une pompe permettant le transfert des effluents organique de la cuve tampon vers le système de filtration ; et
- au moins une sortie pour les effluents traités,

Caractérisé en ce que le système de filtration prend la forme d'au moins deux étages superposés comprenant chacun au moins une ligne de culture hydroponique présentant une longueur comprise entre 1,5 et 2,5 mètres et une inclinaison de sorte à permettre un écoulement gravitaire des effluents organiques en son sein, et dans lequel les effluents organiques arrivent depuis la cuve tampon, par l'action de la pompe, dans la au moins une ligne de culture hydroponique de l'étage le plus haut du système de filtration, la traverse par écoulement gravitaire jusqu'à la au moins une ligne de culture hydroponique de l'étage inférieur, qu'elle traverse également par action gravitaire avant de retourner à la cuve tampon.

Avantageusement, le volume d'agrégats non solubles au sein de l'ensemble des lignes de culture hydroponiques associées à une même cuve tampon est un multiple compris entre 1 et 10 du volume d'effluents organiques introduit à chaque cycle de traitement dans ladite cuve tampon, de préférence il s'agit d'un multiple compris entre 1,5 et 5.

La présente invention a également pour objet un procédé de traitement d'effluents organiques comprenant les étapes de :
∘ pomper un volume d'effluents organiques vers la cuve tampon d'un dispositif de traitement;
∘ pomper lesdits effluents organiques vers le système de filtration du même dispositif de traitement; et
∘ évacuer, potentiellement par pompage ou par écoulement gravitaire, le volume d'effluents organiques après traitement ;
dont le dispositif de traitement est tel que décrit précédemment.

Avantageusement, le procédé selon l'invention comprend une étape préalable de dilution des effluents organiques lors de l'amorçage du dispositif de traitement, les cycles successifs de traitement des effluents utilisant ensuite des effluents de moins en moins dilués avant d'utiliser des effluents organiques non dilués.

De la sorte, et en respectant une telle étape préalable d'amorçage, le procédé selon l'invention permet d'obtenir les meilleurs rendements rapidement et sur la durée.

Avantageusement encore, le procédé selon l'invention utilise un dispositif comprenant au moins un moyen d'aération permettant l'injection d'air dans la cuve tampon et, éventuellement, au sein de tout ou partie des lignes de cultures hydroponiques, caractérisé en ce que ledit au moins un moyen d'aération présente un fonctionnement cyclique de sorte à organiser des périodes d'aération suivies de périodes dite de pause et sans aération. Typiquement ces deux périodes peuvent présenter la même durée, par exemple 30 minutes.

Selon un mode de réalisation particulier, le procédé selon l'invention est destiné à diminuer la teneur totale en azote des effluents organiques à traiter et en ce qu'il comprend en outre l'administration d'un volume d'une source de carbone organique au sein du volume d'effluents organiques à traiter de sorte à ce que le volume total obtenu présente un contenu total en carbone C et un contenu total en azote N, tel que le rapport C/N est compris entre 2 et 15, de préférence entre 6 et 10.

Les inventeurs ont effet montré qu'une telle adjonction d'une telle source de carbone organique au sein d'un tel dispositif de traitement permettait d'améliorer encore la diminution de la teneur en azote au sein des effluents organiques à traiter.

Un troisième objet porte sur l'utilisation d'un dispositif tel que défini précédemment pour le traitement des effluents organiques.

### Description des figures :

La figure 1 schématise un dispositif de traitement dans lequel le système de filtration dispose de lignes de culture hydroponiques en configuration 2 mètres linéaires (mL).
La figure 2 schématise un dispositif de traitement dans lequel le système de filtration dispose de lignes de culture hydroponiques en configuration 4 mL.
La figure 3 montre les concentrations en NH4-N en entrée (lixiviats de compostage) et en sortie (effluents traités) des dispositifs avec les configurations 2 et 4 mL.
La figure 4 présente les efficacités d'abattement obtenues avec le dispositif avec la configuration 2 et dont les effluents organiques se sont vu additionné d'une source de carbone organique pour arriver aux différents ratios C/N listés.

### Description détaillée de l'invention :

Le dispositif selon l'invention vise plus particulièrement le traitement des effluents organiques d'exploitations industrielles de type agroalimentaire ou agricole, de sorte à permettre leur évacuation dans le réseau d'eaux usées ou dans le milieu naturel.

La présente invention a ainsi pour objet un dispositif pour le traitement d'effluents organiques qui comprend :
- au moins une entrée pour les effluents organiques ;
- au moins une cuve tampon, dans laquelle débouche ladite entrée ;
- au moins un système de filtration des effluents organiques ;
- au moins une pompe permettant le transfert des effluents organique de la cuve tampon vers le système de filtration ; et
- au moins une sortie pour les effluents traités,

Où le système de filtration prend la forme d'au moins deux étages superposés comprenant chacun au moins une ligne de culture hydroponique comprenant :
- des agrégats non solubles aptes à permettre la pousse des plantes et à capter les particules en suspension dans les effluents organiques,
- une longueur comprise entre 1,5 et 2,5 mètres et
- une inclinaison de sorte à permettre un écoulement gravitaire des effluents organiques en son sein, et
dans lequel système de filtration, les effluents organiques arrivent depuis la cuve tampon, par l'action de la pompe, dans la au moins une ligne de culture hydroponique de l'étage le plus haut du système de filtration, la traverse par écoulement gravitaire jusqu'à la au moins une ligne de culture hydroponique de l'étage inférieur, qu'elle traverse également par action gravitaire avant de retourner à la cuve tampon

Par " effluents organiques ", on entend tout type d'effluents contenant de la matière organique provenant des collectivités, d'exploitation agricole ou d'industries de type agroalimentaire. En particulier, les effluents sont liquides (effluents de caves vinicoles par exemple). Maintenant, et ils peuvent être le cas échéant préalablement prétraités au moyen par exemple d'un dégrilleur, d'un dessableur et/ou d'un décanteur primaire, notamment pour les eaux usées.

Aussi, le dispositif selon l'invention pourra éventuellement comprendre au moins un dégrilleur, un dessableur et/ou un décanteur primaire au niveau de l'entrée des effluents organiques ou en amont de celle-ci.

Par « cuve tampon », en entend un réservoir permettant d'assurer le fonctionnement du dispositif selon l'invention en circuit fermé pendant un cycle correspondant à un temps minimum compris entre 1 et 200 heures, de préférence entre 24 et 72 heures. De la sorte, la cuve tampon permet d'assurer un traitement minimal des effluents organiques au sein dispositif selon l'invention avant leur évacuation vers l'au moins une sortie.

Une telle cuve tampon présentera un volume compris entre 0,1 et 10 m³, de préférence compris entre 0,2 et 5 m³.

Une telle cuve tampon peut être réalisée dans tout matériau adapté, que ce soit de l'acier inoxydable, de l'aluminium ou du plastique. Maintenant, une telle cuve tampon pourra éventuellement être maçonnée.

De préférence, le dispositif comprend encore au moins un moyen d'aération permettant l'injection d'air dans la cuve tampon et, éventuellement, au sein de tout ou partie des lignes de cultures hydroponiques. Ce moyen d'aération prend typiquement la forme d'un compresseur ou d'une soufflante associé à un diffuseur à membrane au sein de la cuve tampon et, éventuellement, au sein de tout ou partie des lignes de cultures hydroponiques. Ledit moyen d'aération permet d'apporter en continu l'oxygène nécessaire au transformations bactériennes au sein du dispositif selon l'invention. Le débit d'aération au sein de la cuve tampon est régulé par le moyen d'aération de sorte à être compris entre 0,25 et 1 vvm (volume d'air par volume de milieu et par minute), de préférence entre 0,5 et 0,9 vvm et, de manière particulièrement préférée, entre 0,7 et 0,8 vvm.

Maintenant, il est également possible que ledit moyen d'oxygénation permette également l'injection d'air au sein du système de filtration, le long des lignes de culture hydroponiques.

Le moyen d'aération peut fonctionner de façon continu ou cyclique. On préfèrera un fonctionnement cyclique, par exemple avec une alternance de périodes d'aération de 15 à 30 minutes suivies de périodes dite de pause et sans aération de 15 à 30 minutes également.

Typiquement, ledit moyen d'aération permettra une aération par microbullage.

Avantageusement, la au moins une entrée et la au moins une sortie pour les effluents organiques du dispositif selon l'invention sont chacune associée à au moins une vanne permettant d'organiser le fonctionnement du dispositif selon l'invention en circuit fermé pendant une période déterminée.

Avantageusement encore, le dispositif comprendra également au moins un capteur de niveau au sein de la au moins une cuve tampon.

La au moins une entrée pour les effluents organiques est asservie à cet au moins un capteur de niveau de sorte à permettre l'entrée d'un volume déterminé d'effluents organiques, lequel volume déterminé est adapté à celui de la cuve tampon en vue d'un cycle de traitement.

La au moins une sortie pour les effluents traités est également asservie à cet au moins un capteur de niveau de sorte à permettre, avant la fermeture de cette sortie, la sortie de l'ensemble des effluents traités puis, consécutivement, d'initier un nouveau cycle de traitement en permettant à l'au moins une entrée pour les effluents organiques de remplir de nouveau la cuve tampon.

Par « pompe », on entend un dispositif permettant d'aspirer et de refouler les effluents organiques pour permettre leur acheminement de la cuve tampon vers le système de filtration. De préférence, cette pompe comprend un ou plusieurs filtres physiques permettant la rétention de solides ou autres objets qui pourraient l'endommager ou perturber son fonctionnement.

Typiquement, la pompe permet une circulation des effluents dans le système de filtration à un débit de 0,10 à 10 m³/h, de préférence de 0,2 à 1,5 m³/h et, de manière encore plus préférée, de 1 à 1,5 m³/h.

Le terme « ligne », en lien avec l'expression ligne de culture hydroponique, fait référence à un canal de dimension variable et apte à contenir les effluents organiques et les divers composants de la ligne de culture hydroponique qui seront décrits par la suite, dont les plantes dont elles ne doivent pas entraver la croissance. Aussi, la « ligne » prend typiquement la forme d'une gouttière. Ces lignes peuvent être fabriquées à partir de divers matériaux, dès lors qu'ils leurs confèrent une étanchéité satisfaisante pour permettre l'éviction de fuites. A titre d'exemple, les lignes peuvent être en PVC, aluminium, acier galvanisé, ou en zinc.

Avantageusement, le volume d'agrégats non solubles au sein de l'ensemble des lignes de culture hydroponiques associées à une même cuve tampon est un multiple compris entre 1 et 10 du volume d'effluents organiques introduit à chaque cycle dans ladite cuve tampon, de préférence il s'agit d'un multiple compris entre 1,5 et 5.

Les inventeurs ont effet monté qu'un multiple de 2 permettait d'obtenir une efficacité d'abattement de plus de 95% dans la configuration 2mL.

Chaque ligne présente :
- Une largeur comprise entre 8 et 30 centimètres, de préférence entre 10 et 25 centimètres, et de manière particulièrement préférée entre 12,5 et 20 centimètres ;
- Une profondeur comprise entre 8 et 30 centimètres, de préférence entre 10 et 25 centimètres, et de manière particulièrement préférée entre 12,5 et 20 centimètres ; et
- Une longueur comprise entre 1,5 et 2,5 mètres, de préférence entre 1,7 et 2,3 mètres, et de manière particulièrement de 2 mètres.

Maintenant, chaque étage du système de filtration pourra comprendre plusieurs lignes de cultures hydroponiques, disposées en parallèle, de préférence entre 2 et 10 lignes de cultures hydroponiques disposées en parallèle, de préférence entre 4 et 8, typiquement 6 lignes de cultures hydroponiques.

Chaque ligne de culture hydroponique comprend des agrégats non solubles aptes à permettre la pousse de plantes et à capter les particules en suspension dans l'eau. Si ces agrégats peuvent prendre la forme de matière synthétique (plastique), on préfèrera utiliser des agrégats de minéraux.

Avantageusement, les agrégats non solubles de chaque ligne de culture hydroponique sont des minéraux de structure poreuse choisi dans le groupe comprenant la pouzzolane, les billes d'argile, la laine de roche, les granulés de zéolithe et leurs mélanges.

Avantageusement encore, et dans le but d'optimiser le fonctionnement du dispositif selon l'invention, les agrégats minéraux non solubles et de structure poreuse de chaque ligne de culture hydroponique sont préalablement ensemencés en microorganismes. Cet ensemencement est typiquement réalisé par trempage dans des solutions de microorganismes qui peuvent prendre la forme de boues bactériennes d'une station d'épuration ou d'une poudre de microorganismes déshydratés.

Chaque au moins une ligne de culture hydroponique bénéficie d'une inclinaison comprise entre 1 et 10°, de préférence entre 2 et 5° de sorte à permettre un écoulement gravitaire des effluents organiques en son sein. Aussi, et afin d'éviter toute déstabilisation de la structure de chaque ligne de culture hydroponique, chacune d'entre elles est munie d'au moins un filtre dans sa partie basse, à même de laisser passer les effluents organiques en cours de traitement, mais pas les agrégats non solubles.

Chaque au moins une ligne de culture hydroponique comprendra tous les au moins 75 centimètres, de préférence tous les au moins 40 centimètres et, de manière particulièrement préférée tous les au moins 25 centimètres, au moins une plante, utilisable en phytoépuration. Typiquement, ladite plante est choisie dans le groupe comprenant les plantes du genre *Carex, Juncus, Phragmite, Cyperus, Mentha* et *Iris.*

Le genre *Carex* est un genre de plantes de la famille des *Cypéracées* (appelées communément en français Carex ou Laîches). La plupart d'entre elles croissent dans les zones humides (landes, mares forestières...), dans les régions froides à tempérées. De préférence, on choisira une espèce apte à pousser en milieu humide et choisie dans le groupe comprenant *Carex acutiformis, Carex aquatalis, Carex echinata, Carex ovalis, Carex panicea, Carex paniculata, Carex pendula, Carex pseudocyperus* Carex *riparia* et Carex *virgata.*

*Le genre Juncus* est un genre végétal de la famille des *Juncaceae.* C'est le principal genre de joncs. Ce sont des plantes herbacées vivaces vivant en milieu aquatique ou humide dont la tige est droite et flexible. On la trouve souvent près des fossés où les sols sont très humides. De préférence, on choisira une espèce apte à pousser en milieu humide et choisie dans le groupe comprenant *Juncus arcticus, Juncus balticus, Juncus bufonius, Juncus bulbosus, Juncus effusus, Juncus filiformis, Juncus inflexus* et *Juncus guadeloupensis.*

Le genre *Phragmites* est un genre de plantes herbacées de la famille des *Poaceae,* sous-famille des *Arundinoideae.* Ce genre comprend quatre espèces dont une comportant trois sous-espèces. De préférence, cette plante est apte à pousser en milieu humide et, de manière particulièrement préférée, il s'agit de *Phragmites australis.*

Le genre *Cyperus* est un genre de la famille des *Cyperaceae.* Il regroupe des plantes communément appelées souchet qui sont des plantes aquatiques, souvent originaires des régions tropicales et subtropicales, mais on en trouve aussi dans les pays tempérés. De préférence, on choisira une espèce apte à pousser en milieu humide et choisie dans le groupe comprenant *Cyperus papyrus, Cyperus longus, Cyperus alternifolius* et Cyperus *involucratus.*

Les plantes appartenant au genre *Mentha* sont des vivaces de la famille des Lamiacées (Labiées), sous-famille des, tribu *des Mentheae*, sous-tribu des *Menthinae.* Ce genre comprend de nombreuses espèces, dont beaucoup sont cultivées comme plantes aromatiques et condimentaires, ornementales ou médicinales. De préférence, on choisira une espèce apte à pousser en milieu humide et choisie dans le groupe comprenant *Mentha aquatica* et *Mentha citrata.*

Le genre Iris est un genre de plantes vivaces à rhizomes ou à bulbes de la famille des Iridacées. De préférence, on choisira une espèce apte à pousser en milieu humide et choisie dans le groupe comprenant *Iris pseudacorus, Iris orientalis* et *Iris versicolor.*

Optionnellement, les lignes de culture hydroponiques pourront également comprendre d'autres espèces végétales parmi lesquelles les plantes d'ornementation, les plantes aromatiques, les légumineuses ou encore les espèces fruitières.

Maintenant, le mélange d'espèces permet de manière générale de limiter les problèmes de propagation de maladies et d'empêcher une floraison simultanée d'une majorité de plantes au sein de chaque lot, la floraison étant susceptible d'entrainer chez certaines espèces, un arrêt de la croissance et donc une baisse des prélèvements.

En outre, et dans le cas où le dispositif selon l'invention sera destiné au traitement d'effluents organiques dont la production est saisonnière, on choisira alors une ou plusieurs espèces dont la période de croissance maximale correspond à la période d'apport de ces effluents organiques.

Avantageusement, chaque au moins une ligne de culture est recouverte d'une membrane de géotextile percée de telle manière à permettre le passage des parties aériennes des plantes de ladite ligne. Cette membrane permet de protéger le flux d'effluents organiques à filtrer traversant les filtres de la chute inopinée de toutes particules solides telles que des poussières ou des parties fanées des plantes de ladite ligne.

Si chaque système de filtration comprend au moins deux étages superposés, il pourra néanmoins en comprendre davantage. Maintenant, on limitera simplement ce nombre d'étages superposés de sorte que la hauteur de chaque système de filtration soit inférieure ou égale à 3 mètres, de préférence inférieure ou égale à 2,5 mètres.

En outre, et pour permettre la superposition des différents étages, chaque système de filtration comprendra une structure porteuse qui les supportent. De préférence, cette structure porteuse est réalisée en métal.

Au sein d'un système de filtration, chaque étage superposé est disposé en série du suivant, de sorte que les lignes de culture hydroponiques d'un étage alimentent en effluent, dès lors que l'effluent les a traversés dans leur longueur, les lignes de culture hydroponiques de l'étage sous-jacent au sein du même système de filtration.

Le au moins un système de filtration prend typiquement la forme d'un module qui peut être aisément rajouté ou retiré du dispositif selon l'invention.

Dès lors, le dispositif selon l'invention peut intégrer plusieurs systèmes de filtration qui peuvent être disposés en série et/ou en parallèle.

Dans le cas d'une disposition en série, les systèmes de filtration sont disposés les uns à la suite des autres et le flux d'effluents organiques est amené à les traverser successivement les uns à la suite des autres.

Dans le cas d'une disposition en parallèle, le flux d'effluents organiques est séparé pour traverser les différents systèmes de filtration.

Maintenant, on préfèrera combiner agencement parallèle et en série des systèmes de filtration. Ainsi, un dispositif selon l'invention pourra comprendre deux circuits distincts et parallèles, chaque circuit distinct comprenant plusieurs systèmes de filtration en série.

Idéalement, le dispositif selon l'invention est de nature mobile.

D'ailleurs la longueur de chaque ligne de culture est choisie idéalement comme inférieure à 2,35 mètres de sorte à être inférieure à celle des containers de 20 ou 40 pieds.

La présente invention a également pour objet un procédé de traitement d'effluents organiques comprenant les étapes de :
○ pomper un volume d'effluents organiques vers la cuve tampon d'un dispositif de traitement;
○ pomper lesdits effluents organiques vers le système de filtration du même dispositif de traitement; et
○ évacuer le volume d'effluents organiques après traitement ;
caractérisé en ce que le dispositif de traitement est tel que décrit précédemment.

Le procédé selon l'invention repose sur l'utilisation du dispositif de traitement telle que décrite précédemment.

Avantageusement, le procédé selon l'invention comprend une étape préalable de dilution des effluents organiques lors de l'amorçage du dispositif de traitement, les cycles successifs de traitement des effluents utilisant ensuite des effluents de moins en moins dilués avant d'utiliser des effluents organiques non dilués.

Typiquement, une telle étape d'amorçage est réalisée sur une durée comprise entre 1 et 10 jours.

Avantageusement encore, le procédé selon l'invention utilise un dispositif comprenant au moins un moyen d'aération permettant l'injection d'air dans la cuve tampon et, éventuellement, au sein de tout ou partie des lignes de cultures hydroponiques, caractérisé en ce que ledit au moins un moyen d'aération présente un fonctionnement cyclique de sorte à organiser des périodes d'aération suivies de périodes dite de pause et sans aération. Typiquement ces deux périodes peuvent présenter la même durée, par exemple 30 minutes.

Selon un mode de réalisation particulier, le procédé selon l'invention est destiné à diminuer la teneur totale en azote des effluents organiques à traiter et en ce qu'il comprend en outre l'administration d'un volume d'une source de carbone organique au sein du volume d'effluents organiques à traiter de sorte à ce que le volume total obtenu présente un contenu total en carbone C et un contenu total en azote N, tel que le rapport C/N est compris entre 2 et 15, de préférence entre 6 et 10.

Par source de carbone organique, on entend des molécules comprenant tout à la fois du carbone, de l'hydrogène et de l'oxygène. A titre d'exemple de telles sources de carbone organique, on peut citer les alcools.

La présente invention a enfin pour objet une utilisation d'un dispositif tel que défini précédemment pour le traitement des effluents organiques.

Selon un mode de réalisation particulier, cette utilisation vise en outre à diminuer la teneur totale en azote au sein desdits effluents organiques.

Selon un autre mode de réalisation particulier, cette utilisation vise à diminuer la demande chimique en oxygène (DCO) au sein desdits effluents organiques.

D'autres avantages et caractéristiques de l'invention apparaitront mieux à la lecture de la description des modes de réalisation particuliers qui vont suivre, en référence aux dessins annexés, réalisés à titre d'exemples indicatifs et non limitatifs.

### Exemples

### 1. Dispositifs de traitement

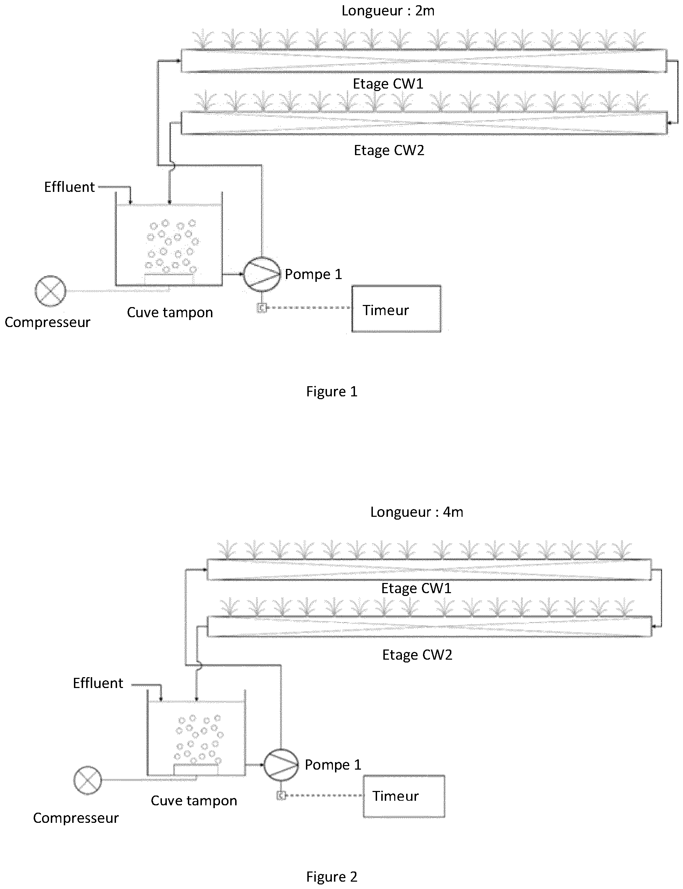

La configuration 2mL comporte deux étages de lignes hydroponiques (figure 1). Chaque étage comporte trois lignes hydroponiques de dimensions 2 × 0,16 × 0,14 m (L × l × h). Chaque ligne comprend 6 plantes (2 juncus, 1 carex, 1 papyrus, 1 iris et 1 plante auxiliaire). Le volume journalier d'effluent à traiter est récupéré et stocké dans la cuve tampon de volume V = 130 L, où se trouve également une aération mécanique forcée (compresseur + diffuseur à membrane). L'effluent est mis en mouvement par une pompe et envoyé à l'entrée des gouttières de l'étage 1. Il s'écoule ensuite librement le long des gouttières jusqu'à l'étage 2, puis jusqu'à la cuve tampon, avant repartir pour un cycle. L'effluent circule donc en cycle fermé pendant la durée de traitement de 24h.

La configuration 4mL se différenciait de la configuration 2mL par une longueur de ligne de quatre mètres (4m) et comporte deux étages de lignes hydroponiques (figure 2). Les plantes sont les mêmes que pour la configuration 2mL, mais en quantité double. Chaque étage comporte trois lignes hydroponiques de dimensions 4 × 0,16 × 0,14 m (L × l × h). Le volume journalier d'effluent à traiter est récupéré et stocké dans la cuve tampon de volume V = 260 L, où se trouve également une aération mécanique forcée (compresseur + diffuseur à membrane). L'effluent est mis en mouvement par une pompe et envoyé à l'entrée des gouttières de l'étage 1. Il s'écoule ensuite librement le long des gouttières jusqu'à l'étage 2, puis jusqu'à la cuve tampon, avant repartir pour un cycle. L'effluent circule donc en cycle fermé pendant la durée de traitement de 24h.

Les deux configurations ont été pensées pour être proportionnelles entre elles. La configuration 4mL est le double de la configuration 2m. Les lignes de longueur quatre mètres implique un volume de garnissage deux fois plus important pour la configuration 4mL que pour la configuration 2mL, et le volume de la cuve tampon est deux fois plus important afin d'accueillir deux fois plus d'effluents dans la configuration 4mL que dans la configuration 2mL.

Afin d'étudier la configuration optimale, l'efficacité des dispositifs précédents a été comparé à celle d'un pilote de type CONSTRUCTED WESTLAND à lit fin et comprenant les mêmes espèces de plantes que celles utilisées dans les deux précédents dispositifs.

### 2. Traitement de l'azote

Pour tester le traitement de l'azote, les différents dispositifs ont été chargés avec des lixiviats de compostage provenant d'une usine de compostage de boues et de déchets verts locaux. Ils correspondant à un mélange des eaux d'arrosage et des eaux de ruissèlement du site lessivant les sols.

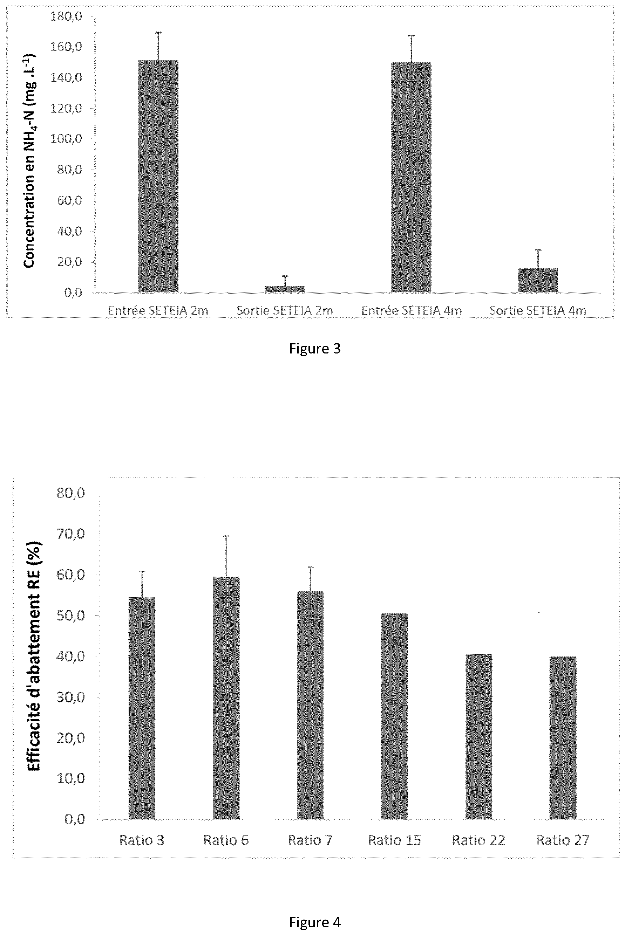

L'influence de la configuration a été étudié par suivi du rendement de charges dépolluées sur 24 heures. Les deux configurations ont été soumises à des concentrations d'entrée équivalentes et des conditions de fonctionnement identiques. Les concentrations en NH4-N d'entrée et de sortie dans l'effluent aussi été mesurées à l'aide de sondes HACH et de tests NANOCOLOR, et sont présentées en figure 3.

Le pilote de type CONSTRUCTED WESTLAND à lit fin, non représenté, a permis une dépollution totale, mais en 260 h.

Lors de la période de test, les concentrations en azote d'entrée et de sortie des effluents ont été mesurées. Les concentrations d'azote en entrée étaient de 151,4 ± 18,2 mg pour la configuration 2mL et de 150,0 ± 17,5 mg (par litre) pour la configuration 4mL. Les concentrations de sortie respectives étaient de 4,4 ± 6,2 mg et 15,8 ± 12,1 mg (par litre). Les concentrations d'entrée ont été jugées comme équivalentes, permettant la comparaison des charges dépolluées par jour et des efficacités d'abattement (%), et illustrant de nouveau la répétabilité de la méthode de préparation. Les concentrations de sortie étaient faibles et ont montrées une dépollution importante malgré leur variabilité.

La configuration 2 mL a montré un rendement pour l'abattement de la concentration en NH4-N de 97,0 ± 3,1 % lors de la période du test, tandis qu'un rendement de 91,9 ± 8,2 % a été déterminé pour la configuration 4mL.

Pour ce qui est des charges dépolluées par jour, il a été déterminées qu'elles étaient de 44,1 ± 4,7 g par jour pour la configuration 2mL et de 36,7 ± 6,8 g par jour pour la configuration 4mL. La configuration SETEIA 2mL a donc montré une efficacité supérieure de l'ordre de 20% à la configuration 4 mL.

Finalement, les résultats ont donc montré une bien meilleure efficacité de la configuration 2 mL.

### 3. Traitement de l'azote optimisé par ajout d'une source de carbone organique

Une source de carbone organique a été ajouté aux effluents à traiter selon de sorte à tester différents rapports Carbone total sur azote total (d'environ 1 à 30).

Les installations et les conditions étaient sinon identiques à celles décrites précédemment.

La figure 4 présente les efficacités d'abattement correspondant aux différents ratios C/N utilisés.

Les résultats montrent une efficacité d'abattement améliorée pour les rapports C/N compris entre 2 et 15, et plus spécifiquement entre 6 et 10.

En conséquence, une telle adjonction de carbone organique permet d'améliorer encore l'abattement de l'azote total.

### Traitement de la demande chimique en oxygène (DCO) et des matières en suspension (MES)

Pour tester ce traitement, les différents dispositifs ont été chargés avec des effluents issus de caves coopératives de producteurs de vin.

Les concentrations en Demande en Oxygène Chimique (DCO) et Turbidité (Tu) ont été mesurées en accordance avec les normes DIN ISO 15705 et ISO 7027 respectivement. Pour ce faire, les Tests NANOCOLOR en cuve ronde (MACHEREY-NAGEL) correspondants ont été utilisés. Les tests ont été lus à l'aide d'un Photomètre compact PF-12Plus (MACHEREY-NAGEL). Les gammes de concentrations des tests utilisés ont été choisies de telle façon à ce que le résultat attendu soit compris dans la plage de 20 - 80% du test, afin d'assurer la meilleure fiabilité. Les échantillons ont été prélevés aux bons volumes directement dans les cuves tampons à l'aide de micropipettes et de cônes adaptés.

Sept expériences ont été réalisées avec différents temps de traitement : deux expériences avec 6h, deux expériences avec 5h, deux expériences avec 3h et une expérience avec 2h de traitement. Les concentrations initiales ont été fluctuantes du fait de la nature réelle de l'effluent : une expérience avec 405 mg par litre, deux expériences avec 300 mg par litre, deux expériences avec 270 mg par litre, une expérience avec 224 mg par litre et une expérience avec 58 mg par litre.

Les résultats ont montré là encore la supériorité de la configuration en 2mL par rapport à la configuration 4 mL. Pour la configuration 2 mL, une dépollution totale a été obtenue à chaque expérience, indépendamment de la concentration initiale et du temps de traitement. Il en résulte que des abattements de 99,9 % ont été atteints pour chaque expérience, et qu'au maximum testé une concentration de 270 mg. L-1 a été dépolluée en 2h de traitement.

## Revendications

1. Un procédé de traitement d'effluents organiques comprenant les étapes de :
a) pomper un volume d'effluents organiques vers la cuve tampon d'un dispositif de traitement ;
b) pomper lesdits effluents organiques vers le système de filtration du même dispositif de traitement ; et
c) évacuer le volume d'effluents organiques après traitement ; où le dispositif de traitement comprend :
• au moins une entrée pour les effluents organiques ;
• au moins une cuve tampon, dans laquelle débouche ladite entrée ;
• au moins un système de filtration des effluents organiques ;
• au moins une pompe permettant le transfert des effluents organique de la cuve tampon vers le système de filtration ; et
• au moins une sortie pour les effluents traités,
**caractérisé en ce que** le au moins un système de filtration prend la forme d'au moins deux étages superposés comprenant chacun au moins une ligne de culture hydroponique comprenant :
• des agrégats non solubles aptes à permettre la pousse des plantes et à capter les particules en suspension dans les effluents organiques,
• une longueur comprise entre 1,5 et 2,5 mètres et
• une inclinaison de sorte à permettre un écoulement gravitaire des effluents organiques en son sein, et
dans lequel système de filtration, les effluents organiques arrivent depuis la cuve tampon, par l'action de la pompe, dans la au moins une ligne de culture hydroponique de l'étage le plus haut du système de filtration, la traverse par écoulement gravitaire jusqu'à la au moins une ligne de culture hydroponique de l'étage inférieur, qu'elle traverse également par action gravitaire avant de retourner à la cuve tampon

2. Le procédé selon la revendication 1, caractérisé en qu'il comprend en outre une étape préalable d'amorçage du dispositif de traitement avec la dilution des effluents organiques, les cycles successifs de traitement des effluents utilisant ensuite des effluents de moins en moins dilués avant d'utiliser des effluents organiques non dilués.

3. Le procédé selon la revendication précédente, caractérisé en que ladite étape d'amorçage est réalisée sur une durée comprise entre 1 et 10 jours.

4. Le procédé selon l'une quelconque des revendications précédentes, **caractérisé en ce que** les agrégats minéraux non solubles et de structure poreuse de chaque ligne de culture hydroponique sont préalablement ensemencés en microorganismes par trempage dans des solutions de microorganismes qui peuvent prendre la forme de boues bactériennes d'une station d'épuration ou d'une poudre de microorganismes déshydratés.

5. Le procédé selon l'une quelconque des revendications précédentes, **caractérisé en ce que** chaque au moins une ligne de culture hydroponique présente une longueur comprise entre 1,7 et 2,3 mètres, de préférence une longueur de 2 mètres.

6. Le procédé selon l'une quelconque des revendications précédentes, **caractérisé en ce que** chaque étage du système de filtration comprendra entre 2 et 10 lignes de cultures hydroponiques disposées en parallèle, de préférence entre 4 et 8 lignes de cultures hydroponiques disposées en parallèle.

7. Le procédé selon l'une quelconque des revendications précédentes, **caractérisé en ce que** chaque au moins une ligne de culture hydroponique bénéficie d'une inclinaison comprise entre 1 et 10°, de préférence entre 2 et 5° de sorte à permettre un écoulement gravitaire des effluents organiques en son sein.

8. Le procédé selon l'une quelconque des revendications précédentes, **caractérisé en ce que** la cuve tampon du dispositif de traitement est un réservoir permettant d'assurer le fonctionnement du dispositif selon l'invention en circuit fermé pendant un cycle correspondant à un temps minimum compris entre 1 et 200 heures, de préférence entre 24 et 72 heures.

9. Le procédé selon l'une quelconque des revendications précédentes, **caractérisé en ce que** le volume d'agrégats non solubles au sein de l'ensemble des lignes de culture hydroponiques associées à une même cuve tampon est un multiple compris entre 1 et 10 du volume d'effluents organiques introduit à chaque cycle de traitement dans ladite cuve tampon, de préférence il s'agit d'un multiple compris entre 1,5 et 5.

10. Le procédé selon l'une quelconque des revendications précédentes, caractérisé en qu'il est destiné à diminuer la teneur totale en azote des effluents organiques à traiter et en ce qu'il comprend en outre l'administration d'une source de carbone organique au sein du volume d'effluents organiques à traiter de sorte à ce que le volume total obtenu présente un contenu total en carbone C et un contenu total en azote N, tel que le rapport C/N est compris entre 2 et 15.

11. Le procédé selon la revendication précédente, caractérisé en que l'administration d'une source de carbone organique au sein du volume d'effluents organiques à traiter est faite de sorte à ce que le volume total obtenu présente un contenu total en carbone C et un contenu total en azote N, tel que le rapport C/N est compris entre 6 et 10.

12. Un dispositif pour le traitement d'effluents organiques tel que défini à l'une quelconque des revendications précédentes.

13. Une utilisation d'un dispositif tel que défini à la revendication 12 pour le traitement d'effluents organiques.

14. L'utilisation selon la revendication précédente, **caractérisée en ce qu'**elle vise à diminuer la teneur totale en azote au sein desdits effluents organiques.

15. L'utilisation selon la revendication 13, **caractérisée en ce qu'**elle vise à Pour diminuer la demande chimique en oxygène (DCO) au sein desdits effluents organiques.
